# EUROPEAN PATENT SPECIFICATION

(11) **EP 1 351 500 B1**
(45) Date of publication and mention of the grant of the patent: **21.10.2009**
(21) Application number: 03100497.1
(22) Date of filing: 28.02.2003
(51) Int. Cl.: H04N 5/781

(54) **Method of digital recording**
Digitale Aufzeichnungsverfahren
Procédé d'enregistrement numérique

(30) Priority: 07.03.2002 GB 2054138; 07.03.2002 GB 2054112; 07.03.2002 GB 2054120
(43) Date of publication of application: 08.10.2003
(73) Proprietor: Nokia Corporation, 02150 Espoo (FI)
(72) Inventor: Burda, Peter, 50494 Boras (SE)
(74) Representative: Piotrowicz, Pawel Jan Andrzej

(56) References cited:
- WO-A-01/26368
- WO-A-99/56216
- US-A- 5 701 383

## Description

The present invention relates to a method of digital recording. In particular, it relates to a method of digital recording in digital television sets and digital television set-top boxes.

US-A-5701383 describes a video time-shifting apparatus which provides operator control over an incoming video program, even if such program is broadcast in real time. It causes a video transmission in progress to be displayed so as to give an operator the impression that the video program material is locally stored, thereby enabling functions such as PAUSE and RESUME to be carried out upon the program material that has already been received.

In digital television, television signals are broadcast in digital form through a terrestrial, cable or satellite network. Digital television has several advantages over longer-established analogue television. It permits transmission of higher resolution images with improved sound quality, while being bandwidth efficient.

A digital receiver is used to receive and decode digital television signals. The receiver can be integrated into a television set or, more usually, come in the form of a set-top box. If a so-called high definition television (HDTV) set is used, then the user can enjoy watching television programmes with a high resolution picture.

Digital television can also be used to provide enhanced services, such as on-screen shopping and internet access, and to give greater control to the user over the choice and presentation of broadcast content. For example, digital receivers can be used to record and playback programmes using an in-built hard disk drive. The user can pause, then presume playback and perform other operations similar to those found in existing video cassette recorders (VCRs) and digital versatile disc (DVD) recorders. An example of a digital receiver haying an in-built hard disk is the Nokia^{™} Mediamaster DVB 9902 S.

A method of digital video recording and playback is described in US-A-5381551. In this system, a circular buffer stored on the disk drive is used to record audio and video programme signal data. Once the buffer is full, old data is overwritten with new data, starting at the beginning of the buffer. However, this system has the drawback that the size of the buffer is set to a predetermined size. This limits the amount of content that may be stored and, thus, the duration of pause.

The present invention seeks to provide an improved method of digital recording.

According to the present invention there is provided a method of digital recording comprising providing a playback file for storing a stream of data, defining, within said playback file, at least one section to be recorded, providing a record file comprising said at least one section and providing an updated playback file excluding said at least one section. This has the advantage that the size of the playback file is kept in check, without sacrificing data which a user wishes to record.

The providing of said updated playback data file may comprise excluding, from said updated playback file, at least one other section of said playback data file which is not comprised in said record file. This has the advantage that not only those sections which are to be recorded, but also those sections which are not to be recorded, are purged from the updated playback file.

The method may comprise defining, within said playback file, at least two sections to be recorded thereby defining at least one section, between neighbouring ones of said at least two sections to be recorded, which is not comprised in said record file. The providing of said updated playback data file may comprise excluding said at least one section between each of said neighbouring ones of said at least two sections to be recorded, which is not comprised in said record file.

The providing of said playback file may include adding a stream of data to a first end of said playback file. The providing of said playback file may include cropping data from a second end of said buffer file. This has the advantage of keeping the size of the playback file in check.

The method may comprise suspending cropping before defining said at least one section to be recorded. This has the advantage that recordable data is not deleted prior to being recorded. The method may comprise resuming cropping after defining said at least one section to be recorded or after providing said record file comprising said at least one section. The method may comprise resuming cropping after adding said cropped section to said record file.

The providing of said record file may comprise said at least one section comprises providing a record file. The providing of said record file comprising said at least one section may comprise copying said at least one section from said playback file to said record file.

The providing of said updated playback file excluding said at least one section may comprise cropping said at least one section from said playback file. The providing said updated playback file excluding said at least one section may comprise cropping said at least one section from said playback file. The providing of said record file comprising said at least one section may comprise adding said at least one cropped section to said record file.

The method may further comprise cropping, from said playback file, at least one other section of said playback file which is not comprised in said record file. This has the advantage that not only those sections which are to be recorded, but also those sections which are not to be recorded are purged from the updated playback file.

The method may comprise defining, within said playback file, at least two sections to be recorded thereby defining at least one section, between neighbouring ones of said at least two sections to be recorded, which is not comprised in said record file. The method may comprise cropping from said playback file said at least one section between each of said neighbouring ones of said at least two sections to be recorded, which is not comprised in said record file.

The method may comprise providing a marker file for storing data relating to position, within said playback file, of said at least one section to be recorded. This has the advantage that data within the playback file is not overwritten with markers. Furthermore, the position of said at least one section may be quickly found by searching the marker file rather than the playback file.

The marker file may comprise at least one pair of pointers, each pair of pointers for specifying a beginning and an end of a respective one of each of said at least one section.

Each pair of pointers may specify the beginning and end of each of a respective one of said at least one section relative to the first end of said playback file. This has the advantage that if data is cropped from the second end of said playback file, the position said at least one section is validly specified.

Each pair of pointers may specify the beginning and end of a respective one of said at least one section relative to the second end of said playback file and the method may further comprise updating said marker file following the cropping of data from said second end of said playback file.

The method may comprise receiving a stream of encoded data and storing said stream in said playback file. The stream of encoded data may be compressed. The stream of encoded data may be encoded according to an MPEG standard. The method may comprise retrieving a stream of encoded data from said updated playback file and decoding said stream. The method may comprise retrieving a stream of encoded data from said record file and decoding said stream

According to the present invention there is provided a computer program for executing the method.

According to the present invention there is provided a computer program which, when loaded and executed by a digital recording device, causes said digital recording device to provide a playback file for storing a stream of data, to define, within said playback file, at least one section to be recorded, to provide a record file comprising said at least one section and to provide an updated playback file excluding said at least one section.

According to the present invention there is further provided a digital recording device comprising a storage medium, a supply of a stream of data, a processor, wherein said processor is configured to provide a playback file for storing said stream of data in said storage medium, to define, within said playback file, at least one section to be recorded; to provide a record file comprising said at least one section and to provide an updated playback file excluding said at least one section.

According to the present invention there is still further provided a digital television receiver including the digital recording device.

According to the present invention there is still further provided a digital television set including the digital recording device.

Embodiments of the present invention will now be described by way of example with reference to the accompanying drawings in which:-
Figure 1 shows a digital receiver and a television set;
Figure 2 is a schematic diagram of a digital receiver;
Figure 3 shows a functional layer structure of a digital receiver shown in Figure 2;
Figure 4 shows a dynamic view buffer;
Figure 5 illustrates cropping a file;
Figure 6 illustrates cropping-to-file of a file;
Figure 7 illustrates truncating a file;
Figures 8a and 8b illustrate cropping using a FAT-based file system;
Figures 9a to 9h illustrate dynamic viewing;
Figures 10a to 10c illustrates channel swapping;
Figure 11 is a flow diagram of a method of digital recording;
Figures 12a to 12d show modification of a dynamic view buffer during recording;
Figure 13 shows a section record marker file;
Figure 14 is a flow diagram of a method of creating a recording file;
Figures 15a to 15g show creation of recording file;
Figure 16 is a flow diagram of another method of creating a recording file; and
Figures 17a to 17e show creation of recording file.

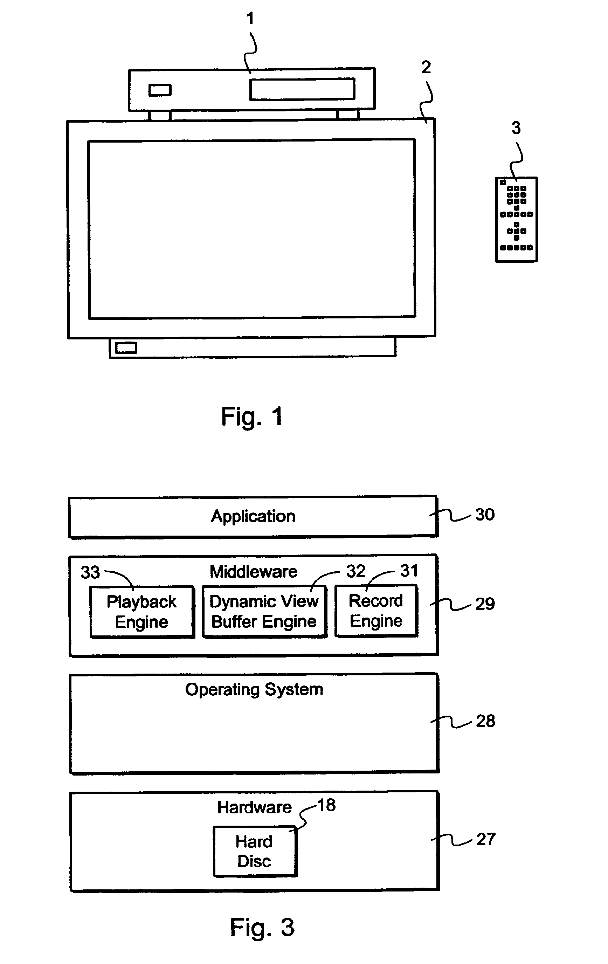

Referring to Figure 1, a user is provided with digital television service using a digital receiver 1 and a display device, such as a television set 2. The digital receiver 1 is in the form of a module, usually sold separately from the television set 2, which is commonly referred to as a "set-top box". The digital receiver 1, however, may be incorporated into the television set 2 and such television sets are usually referred to "integrated digital television sets". The television set 2 is capable of displaying high definition (HD) format images with a 16:9 aspect ratio and 1920×1080 pixels, although a television set capable of only displaying standard definition (SD) format images may also be used. A remote control unit 3 is provided for controlling the digital receiver 1 and, optionally, the television set 2.

A radio frequency (r.f.) signal carrying one or more digital television channels is transmitted by a broadcaster through a digital video broadcasting network comprising satellite, cable or terrestrial network (not shown) and is fed into the digital receiver 1. The digital receiver 1 processes the r.f. signal so as provide video and audio signals for the television set 2. The user can select a channel and watch television programmes. As will be explained in more detail later, the digital receiver 1 provides dynamic viewing functionality which allows viewing to be paused, then resumed without loss programme content, replaying of content and fast-forwarding.

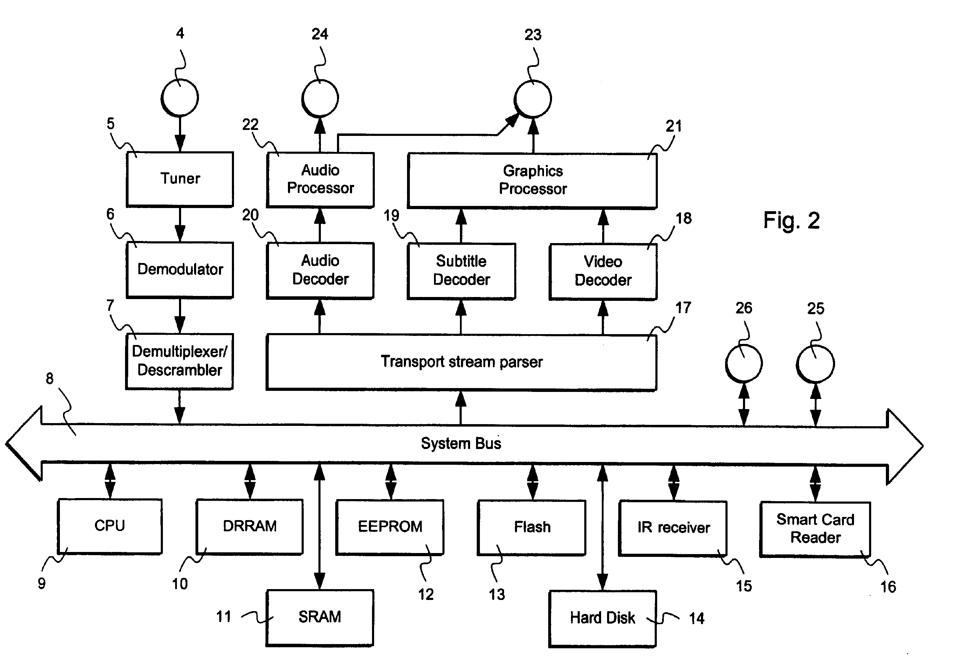

The digital receiver 1 will now be described in more detail:
Referring to Figure 2, the digital receiver 1 includes a port 4, a tuner 5, a demodulator 6, a demultiplexer and decryptor unit 7 and a system bus 8. The demultiplexer and decryptor unit 7 is hereinafter referred to simply as the demultiplexer 7.

An r.f. signal (not shown) carrying one or more channels is received from the digital video broadcasting network (not shown) and fed via the port 4 into the tuner 5. The tuner 5 isolates a channel and produces a baseband signal. The baseband signal is fed into the demodulator 6 which produces a digital bit-stream comprising data packets. The bit-stream is passed into the demultiplexer 7 which sorts the data packets according to programme and produces a transport stream which is placed on the system bus 8.

The digital receiver 1 includes a central processing unit (CPU) 9, memory, in the form of dynamic random access memory (DRAM) 10, static random access memory (SRAM) 11, electrically erasable and programmable read-only memory (EEPROM) 12 and flash memory 13, and storage 14, in the form of a hard disk drive. In this case, the hard disk 14 has a capacity of 40 GB. The digital receiver 1 further includes an infrared receiver 15 for receiving signals from the remote control 3 (Figure 1) and a smart card reader 16 for receiving a smart card (not shown) holding data needed by the demultiplexer 7 for decrypting signals.

The digital receiver 1 includes a transport stream parser 17, a video decoder 18, a subtitle decoder 19 and an audio decoder 20, a graphics processor 21 and an audio processor 22.

The digital receiver 1 also includes several interfaces including a SCART connector 22 for providing video and audio signals to the television set 2, an audio connector 23 for providing audio-only signals to audio equipment (not shown), a serial port 24 and a return channel port 25 for connection to a modem (not shown). Additional ports may also be provided such as an auxiliary SCART connector for providing signals to a video cassette recorder (not shown) or a Universal Serial Bus (USB) connector.

The transport stream, which is fully or partially encoded, preferably according to the MPEG-2 standard, is directed to the hard disk 14 for storage or to the transport stream parser 17. The transport stream parser 17 processes the transport stream, which comprises data packets, and determines to which decoder 18, 19, 20 to send data packets. The decoders 18, 19, 20 decode and decompress the data packets and pass them on to the processors 21, 22 for further processing. Signals from the video and audio processors 21, 22 are fed to the SCART and audio connectors 23, 24 for transmission to the television set 2 (Figure 1) and, optionally, speakers (not shown).

The CPU 9 controls operation of the digital receiver 1. When the digital receiver 1 is switched on, the CPU 9 loads and runs an operating system from EEPROM 12.

The operating system includes device drivers to control hardware devices such as the hard disk 14. Instructions as to how the digital receiver 1 should operate are received from an application run by the CPU 9, loaded from the EEPROM 12, the flash memory 13 or the hard disk 14. In this example, applications are not platform specific. Therefore, additional software, often referred to as "middleware", is used to help applications and the operating system communicate.

Referring to Figure 3, a functional layer structure of the digital receiver 1 comprises digital receiver hardware 27, an operating system 28, middleware layer 29 and an applications layer 30. It will be appreciated that the middleware layer 29 and the operating system layer 28 may be combined.

As will be described in more detail later, the middleware layer 29 includes a dynamic view buffer engine 31 and a record engine 32 which are used control dynamic viewing by creating and managing files on the hard disk 14 and a playback engine 33 which is used to read files and transmit transport stream to the transport stream parser 17.

### Dynamic viewing

Dynamic viewing refers to a method of viewing television. Content from a live feed, in this case transport stream, is continuously stored in a buffer held on the hard disk 14. The buffer can then be accessed at different points thus allowing playback to be time-shifted.

If the user simply wishes to watch the live feed, then content is read from the buffer as soon as it is stored. If the user suspends viewing, content continues to be stored in the buffer. This allows the user to resume viewing at a later time from the point viewing was suspended.

Content is not immediately erased when it is played back. This allows the user to replay content. However, a consequence of this is that the buffer will continue to grow unchecked. Thus, it is advantageous to manage the buffer so as to prevent this from happening unnecessarily.

### Dynamic view buffer

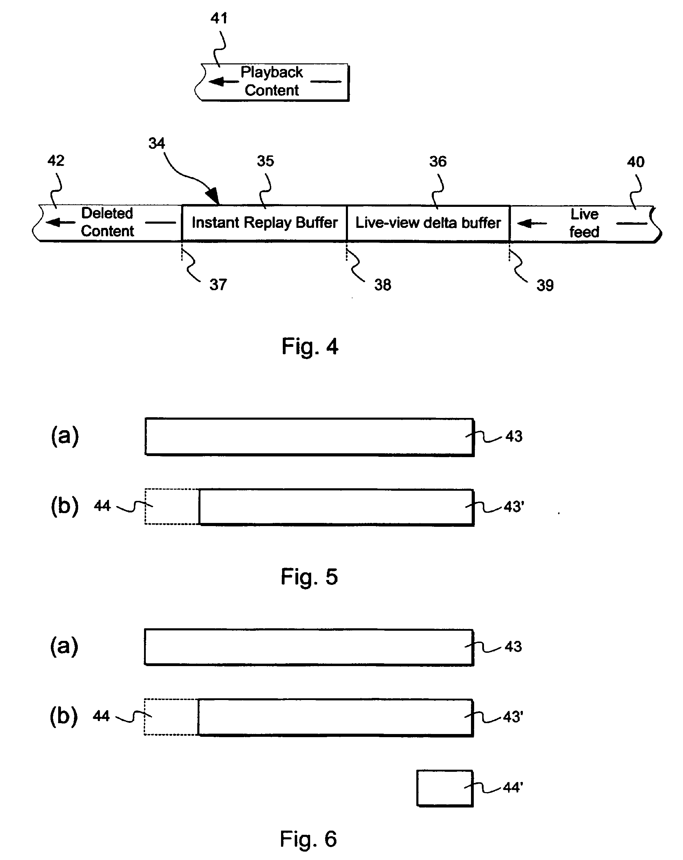

Referring to Figure 4, a playback file, hereinafter referred to as a dynamic view buffer 34, is stored on the hard disk 14. The dynamic view buffer 34 comprises first and second parts 35, 36, a beginning 37, an intermediate point 38 and an end 39.

Transport stream 40 comprising live feed is received from the demultiplexer 7 via the system bus 8 and is added to the second part 36 of the dynamic view buffer 34 at the end 39 of the buffer 34. Because of this, the second part 36 of the buffer 34 is referred to as the "live-view delta buffer" while the end 39 of the buffer 34 is referred to as the "live position".

Data 41 is taken from the intermediate point 38 of the buffer 34 for playback. Because of this, the intermediate point 38 is referred to as the "view position". The first part 35 of the buffer 34 is known as the "instant replay buffer" and comprises content preceding the view position 38 which may, although not necessarily, have been watched by the user.

As will be explained in more detail later, as the stream of data 40 is fed into the end 39 of the buffer 34, the buffer 34 grows. If playback is paused, then the live-view delta buffer 36 grows, while the instant replay buffer 35 remains the same. If playback occurs, then the view position 38 shifts. Content which was once part of the live-view delta buffer 36 becomes part of the instant replay buffer 35. Thus, the live-view delta buffer 36 remains constant in size, while the instant replay buffer 35 grows. In either case, the size of the dynamic viewing buffer 34, and in particular the instant replay buffer 36, may be kept in check by deleting content 42 from the beginning 37 of the dynamic viewing buffer 34.

### File operation

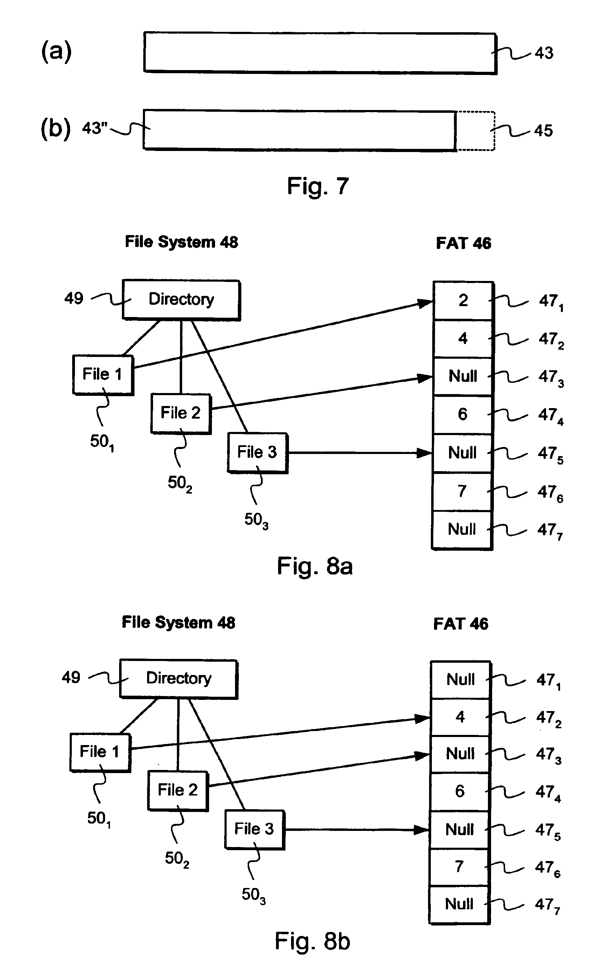

To manage the dynamic view buffer 34 and other files held on the hard disk 14, the record engine 31, the dynamic view buffer engine 32 and the playback engine 33 use file operations including crop, crop-to-file and truncate, which will now be described in more detail:
Referring to Figures 5a and 5b, a crop operation, **Crop()**, removes from the beginning of a file 43, a portion of data 44 thus leaving a cropped file 43'. The crop function is used to prevent the dynamic view buffer 34 from growing too large. The removed data portion 44 is lost.
Referring to Figures 6a and 6b, a crop-to-file operation, **Crop_to_file()**, not only crops the file 43 as described earlier, but stores the removed data portion 44 as a new file 44'.
Referring to Figure 7a and 7b, a truncate operation, **Truncate()**,removes from the end of a file 43, a portion of data 45 thus leaving a truncated file 43".

Other conventional file operations such as copy, **Copy(),** are also used.

### Crop implementation using FAT-based file system

In File Allocation Table (FAT)-based systems, implementation of a crop function is straightforward. Table entries of a FAT have a one-to-one correspondence to clusters of a hard disk. Each table entry is a pointer to another entry in the table. Thus, clusters in a file are represented by pointing to the first cluster of the file. The rest of the clusters are linked using FAT entries pointing to the next entry.

Thus, to implement a simple crop function, **Crop()**, a pointer to the first cluster is set to point to a cluster further down the linked list. Simple cropping is carried out in units of clusters.

Referring to Figures 8a, a FAT 46 comprises first, second, third, fourth, fifth, sixth and seventh entries 47₁, 47₂, 47₃, 47₄, 47₅, 47₆, 47₇. Each table entry 47₁, 47₂, 47₃, 47₄, 47₅, 47₆, 47₇ includes a pointer to another table entry 47₁, 47₂, 47₃, 47₄, 47₅, 47₆, 47₇ or a null value. For example, the first entry 47₁ includes a pointer to the second entry 47₂. The second entry 47₂ includes a pointer to the fourth entry 47₄.

A file system 48 includes a file directory 49 and first, second and third files 50₁, 50₂, 50₃. The first file 50₁ comprises clusters corresponding to first, second, fourth, sixth and seventh entries 47₁, 47₂, 47₄, 47₆, 47₇. The second file 50₂ comprises a cluster corresponding to the third entry 47₃. The third file 50₃ comprises a cluster corresponding to the fifth entry 47₅.

Referring to Figure 8b, the first file 51₁ is cropped by pointing to the second entry 47₂, thereby removing the cluster corresponding to the first entry 47₁.

The simple crop may be refined to allow smaller units of data to be cropped. A header is included in each cluster containing information relating to the starting position of blocks of data. Thus, smaller units of data may be "skipped".

### Dynamic Viewing

The dynamic view buffer engine 32 (Figure 3) is used to create a dynamic view buffer 34 for each channel viewed. The playback engine 33 controls retrieval of content 41 (Figure 4) for supply to the transport stream parser 17 and cropping of the dynamic view buffer 34.

### Creating a dynamic view buffer

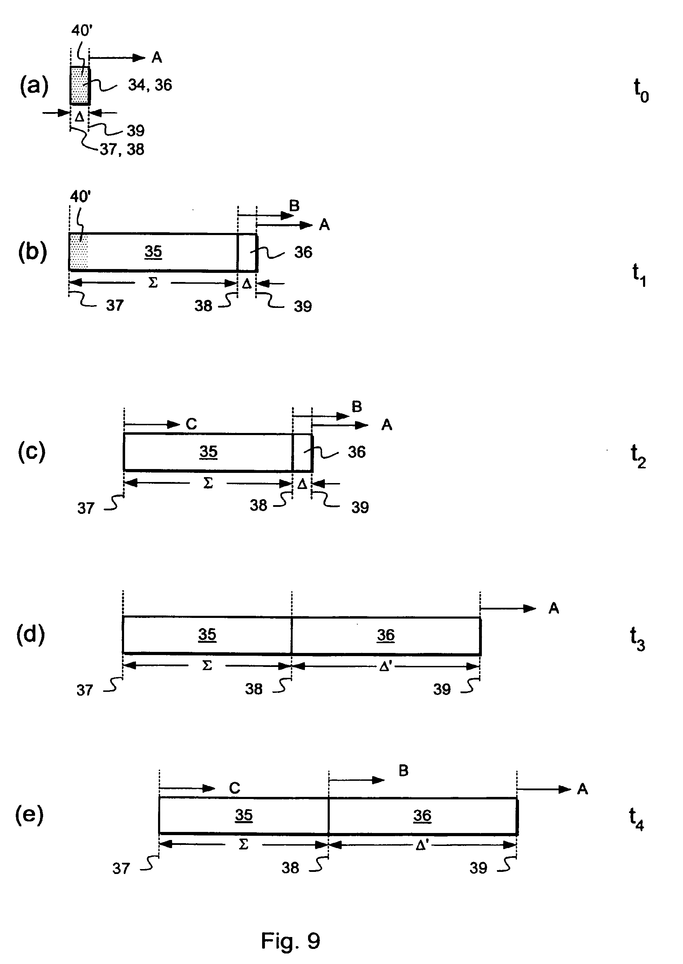

Referring to Figure 9a, when a user selects a channel, a dynamic view buffer 34 is created on the hard disk 14 into which live feed 40 (Figure 4) is fed. Thus, the live-view delta buffer 36 begins to grow, as indicated by arrow 'A'. A first amount of content 40', placed at the beginning of the dynamic view buffer 34, is shown as a shaded portion in Figure 9a. Playback is preferably initiated as soon as possible to minimize lag Δ between the live position 39 and view position 38. This point in time may be labelled time t₀.

### Playback

Referring to Figure 9b, as the user watches television, the view position 38 moves along the dynamic view buffer 34 and content 41 (Figure 4) is read out. Thus, the instant replay buffer 35 grows, as indicated by arrow 'B', until, at a time t₁ > t₀, it reaches a predetermined size Σ, which may be set by the user or the receiver 1. The live-view delta buffer 36 remains the same size, namely Δ. Thereafter, the dynamic view buffer 34 is cropped to maintain the size of the instant replay buffer 35.

Referring to Figure 9c, the size of the instant replay buffer 35 is maintained by cropping the dynamic view buffer 34, as shown by arrow 'C', at the same rate as data 41 for viewing is read. Thus, as live feed is fed into the end 39 of the dynamic view buffer 34, content is deleted from the beginning 37. Consequently, the content 40' at the beginning of the dynamic view buffer 34 is eventually erased.

### Live pause

Referring to Figure 9d, the user pauses live playback using the remote control 3 (Figure 1). The view position 38 is held and cropping is suspended. However, live feed continues to be supplied into the end 39 of the dynamic view buffer 34. Thus, the live-view delta buffer 36 and the lag Δ begin to grow. At time t₃, the live-view delta buffer 36 has grown to Δ', where Δ' > Δ.

### Resuming playback

Referring to Figure 9e, the user resumes playback using the remote control 3 (Figure 1). Live feed continues to be supplied to the end 39 of the dynamic view buffer 34, as shown by arrow 'A', read-out of content and transfer of data from the live-view delta buffer 36 to the instant replay buffer 35 resumes, as shown by arrow 'B' and cropping of the dynamic view buffer 34 is also resumed, as indicated by arrow 'C'.

### Replay

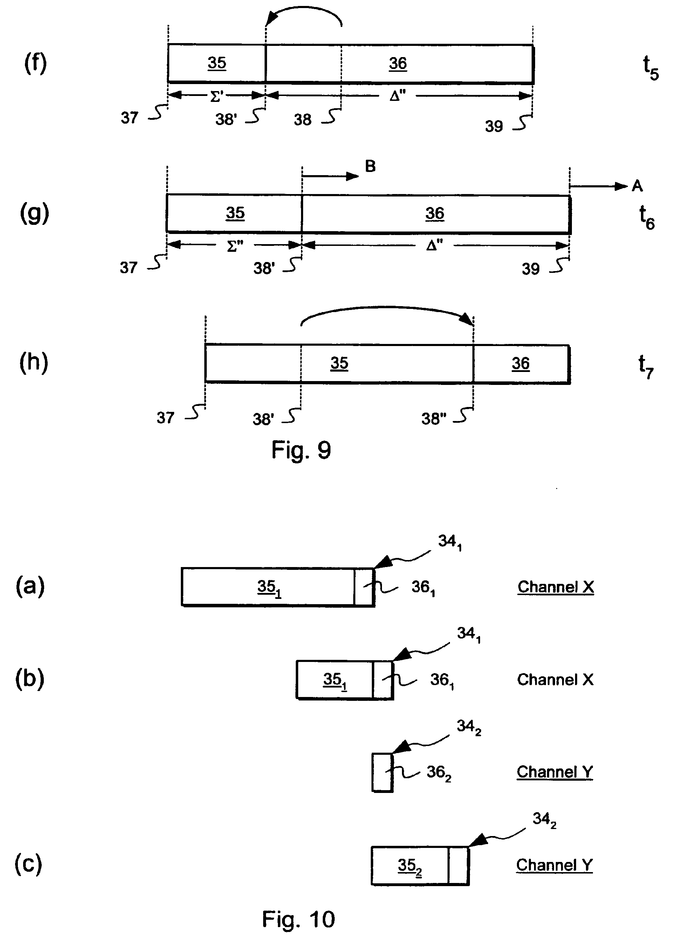

Referring to Figure 9f, the user can replay content using the remote control 3 (Figure 1). The view position 38 jumps back a predetermined number of bytes to a back view position 38'. Playback thereafter continues.

Referring to Figure 9g, if the jump back causes the instant replay buffer 35 to have a size Σ", such that Σ" < Σ, then cropping is suspended during playback, until it reaches the predetermined limit Σ.

### Fast forward

Referring to Figure 9h, the user can also jump forward. The back view position 38' jumps forward a predetermined number of bytes to a forward view position 38". Playback thereafter continues. The size of the instant replay buffer 35 may also be adjusted to the predetermined limit Σ.

### Changing channel

Referring to Figure 10a, an existing dynamic view buffer 34₁ is maintained while the user watches a channel, in this case Channel X, in a manner hereinbefore described.

Referring to Figure 10b, if a user changes channel, to Channel Y, live feed to the existing dynamic view buffer 34₁ is suspended, a new dynamic view buffer 34₂ is created and live feed is fed to the new dynamic view buffer 34₂.

Referring to Figure 10c, the existing dynamic view buffer 34₁ is erased, thus leaving the new dynamic view buffer 34₂.

### Recording

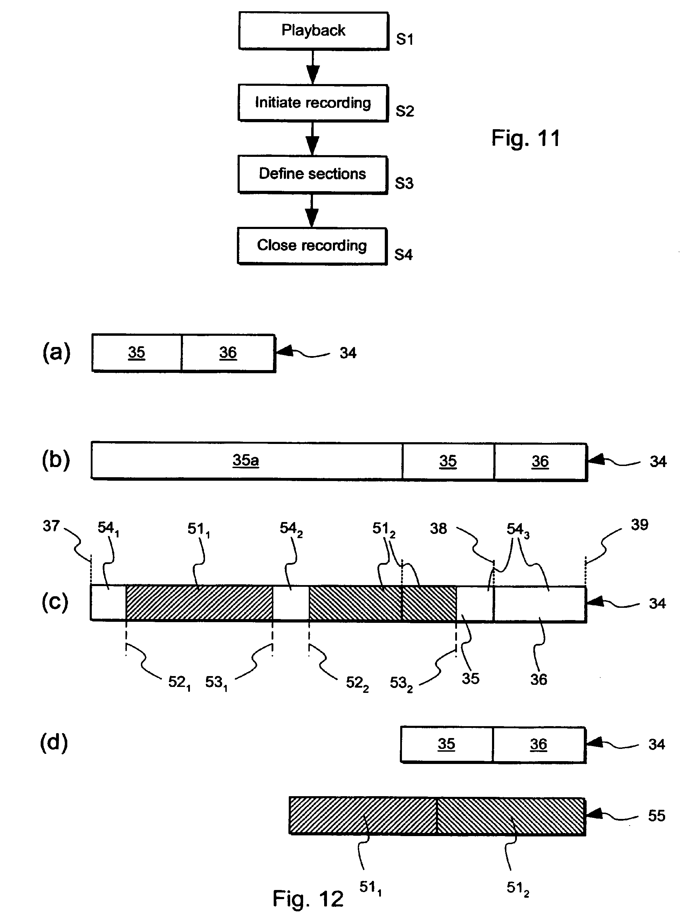

A process by which a user can record content for later viewing will now be described:
Referring to Figures 11 and 12a, a dynamic view buffer 34 is created and content played back in a manner hereinbefore described (step S1)
Referring now to Figures 11 and 12b, the user instructs the digital receiver 1 that he wishes to record a program. The digital receiver 1 responds by initiating recording (step S2). This comprises disabling cropping to prevent erasure of potentially wanted content. Thus, the dynamic view buffer includes a temporary instant replay buffer portion 35a at the beginning of the dynamic view buffer 34.
Referring now to Figures 11 and 12c, the user identifies sections that they wish to record 51₁, 51₂ (step S3). A start 52₁, 52₂ and end 53₁, 53₂ of each section 51₁, 51₂ to be recorded is marked. This may be done by the user viewing the content of the dynamic view buffer 34 at a normal or accelerated rate, optionally pausing playback, and instructing the digital receiver 1 to put down a **record_start** or **record_end** mark. The marks are stored as metadata in either a separate file on the hard disk 14 or in flash memory 13. As a result of the user's selection, one or more sections 54₁, 54₂, 54₃ of the dynamic view buffer 34 are not selected to be recorded. Marking is described in more detail later.
Referring now to Figures 11 and 12d, the user instructs the digital receiver 1 that they have finished marking-up sections 51 (step S4). Each section 51 is recorded to a file 55 using crop, crop-to-file and/or copy. A truncate operation may also be used. The temporary instant replay buffer portion 35a is deleted by purging the dynamic view buffer 34 of one or more complete or partial selected sections 51 and one or more complete or partial unwanted sections 54.

Playback is then resumed and cropping is re-enabled.

### Recording - Section record marker file

The process at steps S2 and 3 will now be described in more detail:
Referring to Figures 11, 12c and 13, when a recording is initiated, a section record marker file 56 is created on the hard disk 14 or in memory, such as DRAM 10 or flash memory 13.

The start 52₁, 52₂ and end 53₁, 53₂ of each section 51₁, 51₂ are recorded in the recorder marker file 56 as record_start 57₁, 57₂ and record_end 58₁, 58₂ marks respectively Preferably, the marks 57, 58 are recorded in the file 56 in the order that the start and ends 57, 58 of the sections 51 which they represent appear in the dynamic view buffer 34. Each mark 57, 58 comprises meta-data pointing to a position 57, 58 within the dynamic view buffer 34. Preferably, the meta-data point to the positions 57, 58 relative to end 39 of the dynamic view buffer 34. However, the meta-data may point to the positions 57, 58 relative to beginning 37 of the dynamic view buffer 34, provided pointers are updated whenever a crop or crop-to-file operation is performed resulting in a change of the position of the start 37 of the dynamic view buffer 34.

Two examples of the process at step S4 will now be described in more detail:

### Recording - Section recording and dynamic view buffer purging - Example 1

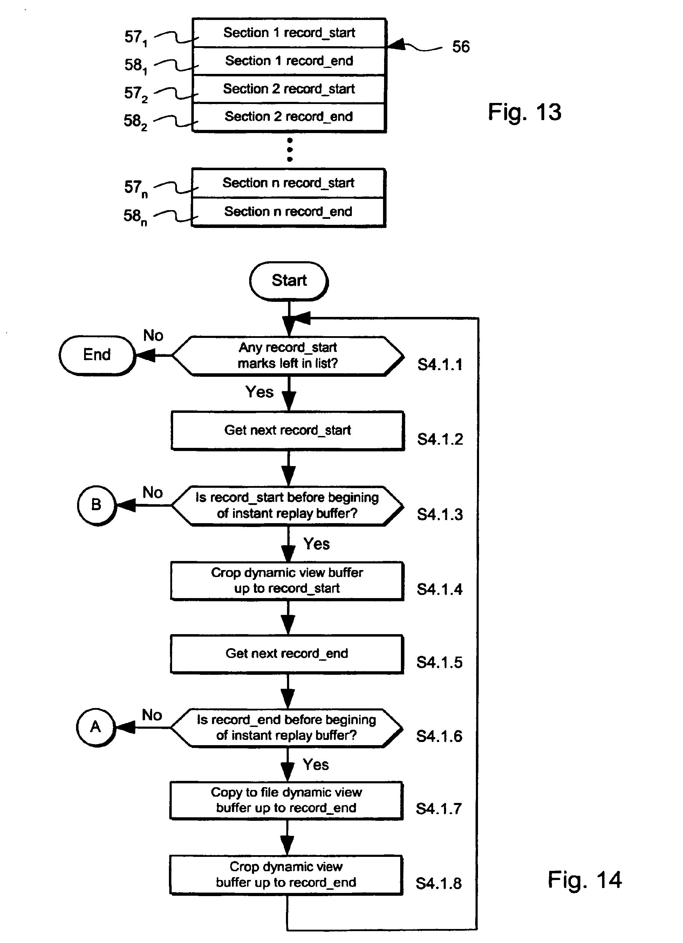

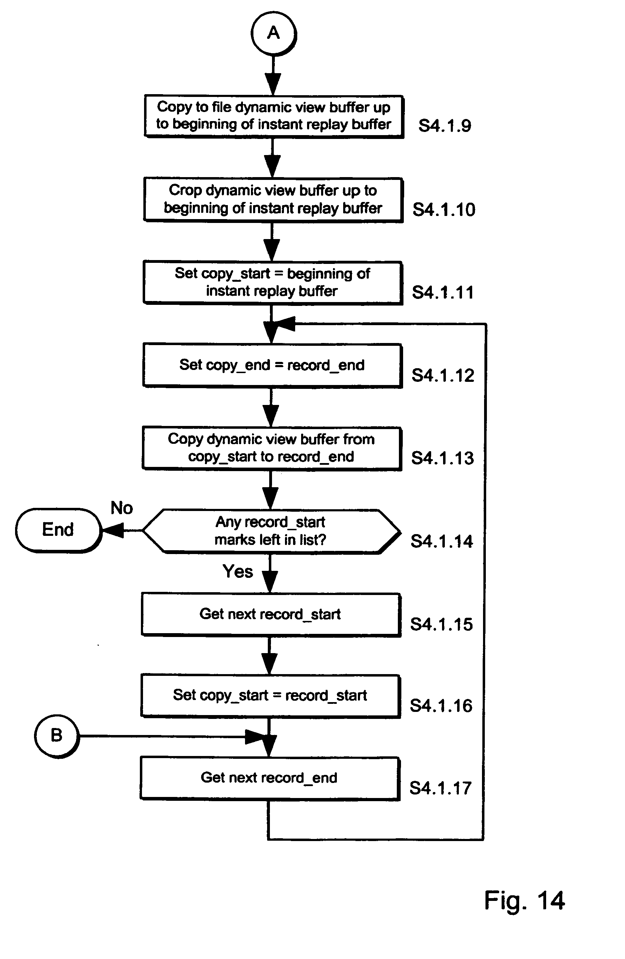

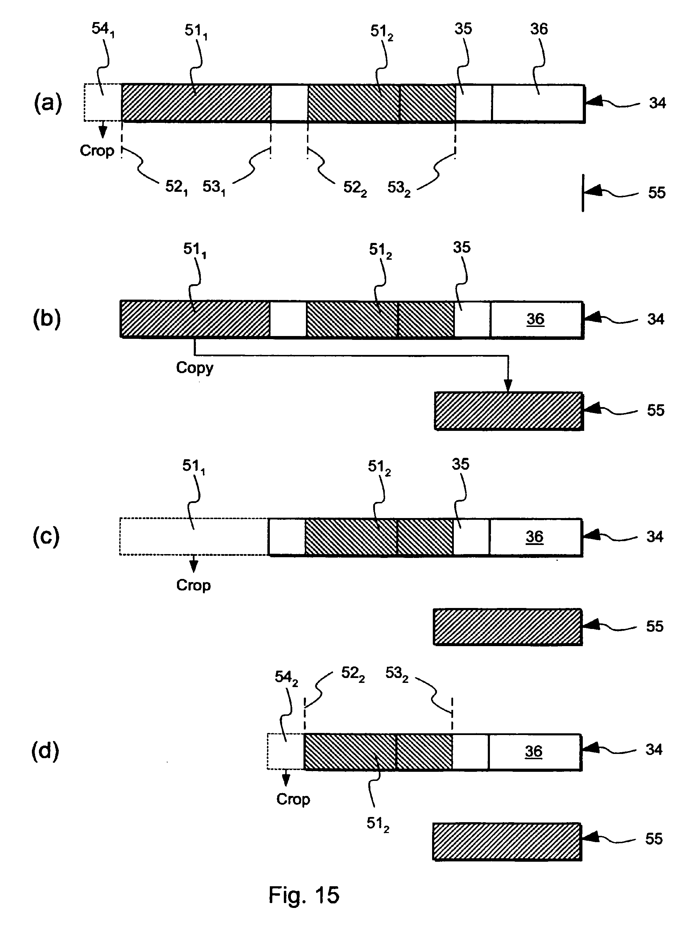

Referring to Figures 14 and 15a, the dynamic view buffer engine 32 (Figure 3) checks whether there is a record_start marker 57 in the section record marker file 56 (step S4.1.1). If a record_start marker 57₁ is found, then it retrieves the record_start marker 57₁ which points to the record_ start 52₁ (step S4.1.2). The dynamic view buffer engine 32 checks whether the record_start 52₁ precedes the beginning of instant replay buffer 35 (step S4.1.3). If so, a part 54₁ preceding the record_start 52₁ is cropped (step S4.1.4).

Referring to Figure 15b, the dynamic view buffer engine 32 then retrieves the record_end marker 58₁ (step S4.1.5). It checks whether the record_end 53₁ precedes the beginning of the instant replay buffer 35 (step S4.1.6). If so, the section 51₁ found between the record_start 52₁ and record_end 53₁ is copied to the record file 55, which is created at step S2 (step S4.1.7).

Referring to Figure 15c, the section 51₁ is cropped from the dynamic view buffer 34 (step S4.1.8).

The process returns to step S4.1.1, searching the dynamic view buffer 34 for the next section 51₂ to record.

Referring to Figure 15d, if the process finds another record_start marker 52₂ at step S4.1.1 and it is determined at steps S4.1.2 and S4.1.3 that the record_start 52₂ precedes the beginning of instant replay buffer 35, then a part 54₂ preceding the record_start marker 52₂ is also cropped at step S4.1.4.

The second section 51₂ overlaps with the instant replay buffer 35. In this case, the process branches at step S4.1.6.

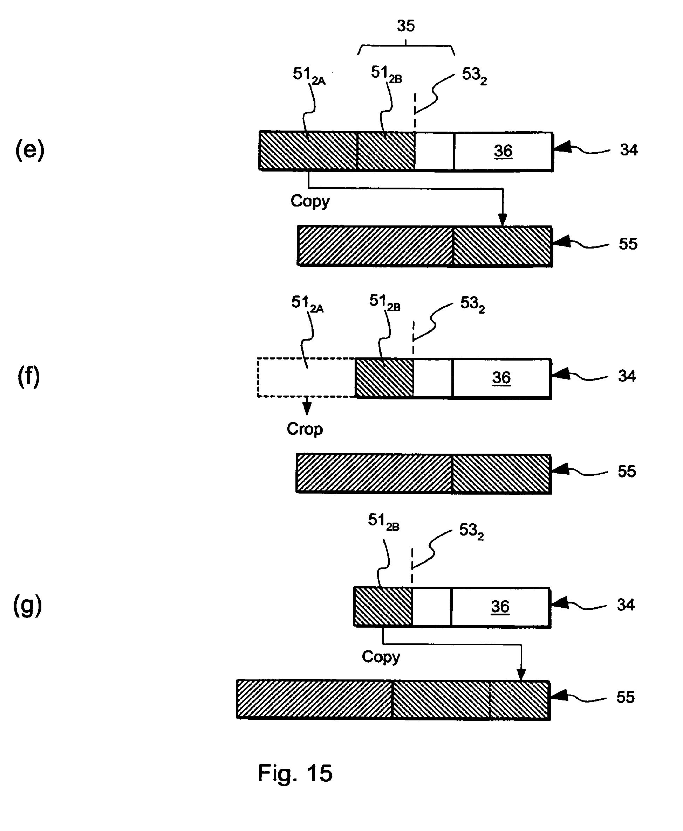

Referring to Figure 15e, a portion 51_{2A} between record_start 52₁ and the beginning of the instant replay buffer 35 is copied to the start of the record file 55 (step S4.1.9).

Referring to Figure 15f, the section 51_{2A} is cropped from the dynamic view buffer 34 (step S4.1.10).

Up until now, the process has copied and cropped sections of the dynamic view buffer 34. Thus, the process has been operating in "copy-and-crop mode". However, once the process enters the instant reply buffer 35, it begins to copy sections to the record file 55. Consequently, the process switches to "copy only mode".

The process sets a copy_start marker (not shown) to the beginning of the instant replay buffer 35 (step S4.1.11) and sets a copy_end marker (not shown) to the record_end 53₂ (step S14.1.12). The copy_start and copy_end markers are preferably stored in cache memory (not shown) in the CPU 9 or in other memory, such as DRAM 10.

Referring to Figure 15g, a portion 51_{2B} found between the beginning of the instant replay buffer 35 and the record_end 53₂ is copied to the beginning of the record file 55 (step S4.1.13). Cropping is not used so as to preserve the instant replay buffer 35 intact.

The process then checks whether there are any further record_start marks 57 left in the section record marker file 56 (Figure 13) (step S4.1.14). If no other record_start mark 57 is found, as in this case, then the process ends. Otherwise, the process retrieves the record_start marker 57 which points to a record_ start 52 (step S4.1.15) and sets a copy_start marker (not shown) to the record_ start 52 (step S4.1.16). It then retrieves the record_end marker 58 (step S4.1.17). The process returns to step S4.1.12, where a copy_end marker (not shown) is set to the record_end 53, following which the section is copied to the beginning of the record file 55 at step S4.1.13.

The dynamic viewing buffer 34 and record file 55 is shown in Figure 12d. A file footer may be optionally added.

### Recording - Section recording and dynamic view buffer purging - Example 2

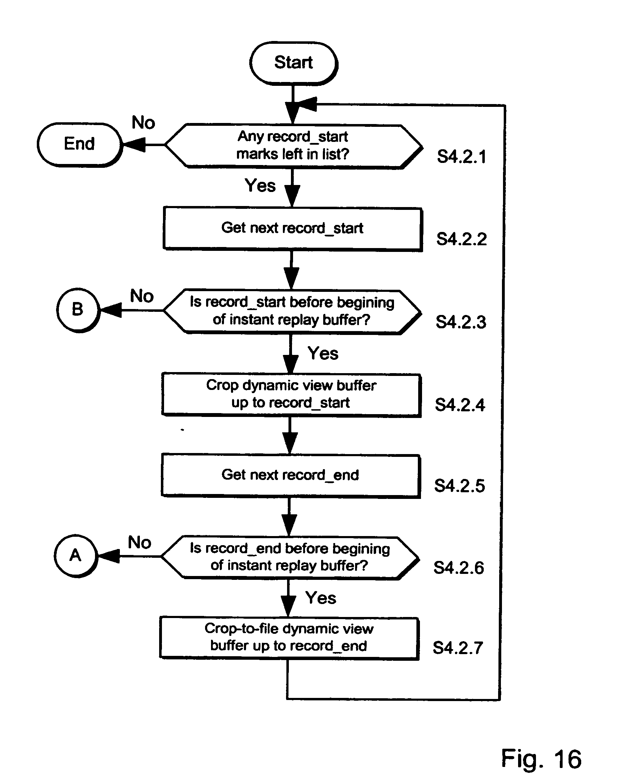

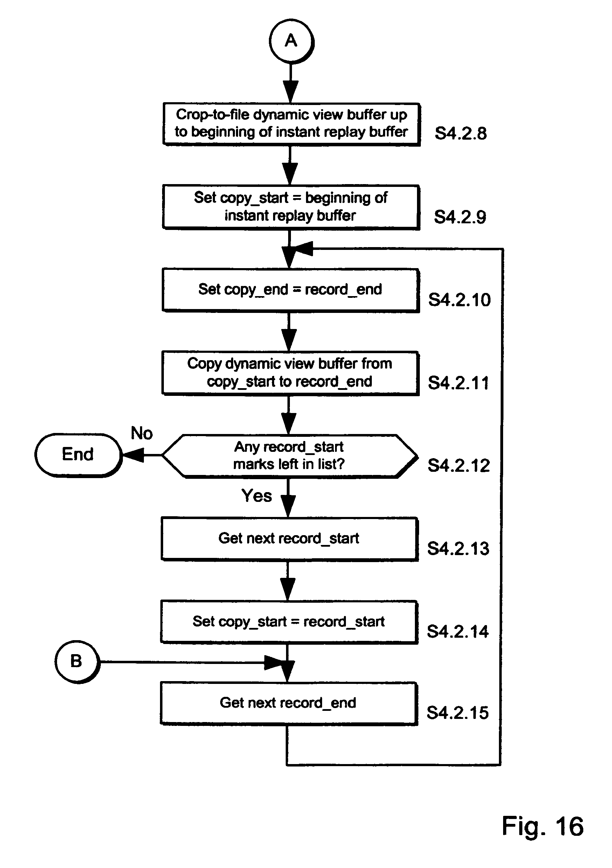

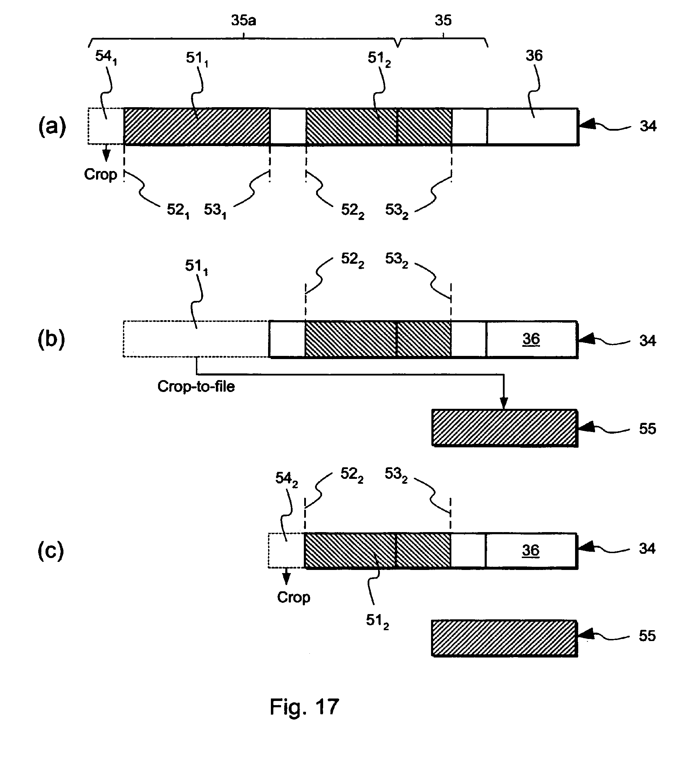

Referring to Figures 16 and 17a, the dynamic view buffer engine 32 (Figure 3) checks whether there is record_start marker 57 in the section record marker file 56 (step S4.2.1). If a record_start marker 57₁ is found, then it retrieves the record_start marker 57₁ which points to the record_ start 52₁ (step S4.2.2). The dynamic view buffer engine 32 checks whether the record_start 52₁ precedes the beginning of instant replay buffer 35 (step S4.2.3). If so, a part 54₁ preceding the record_start 52₁ is cropped (step S4.2.4).

Referring to Figure 17b, the dynamic view buffer engine 32 then retrieves the record_end marker 58₁ (step S4.2.5). It checks whether the record_end 53₁ precedes the beginning of the instant replay buffer 35 (step S4.2.6). If so, the section 51₁ found between the record_start 52₁ and record_end 53₁ is cropped to the record file 55 (step S4.2.7).

The process returns to step S4.2.1, searching the dynamic view buffer 34 for the next sections 51₂ to record.

Referring to Figure 17c, if the process finds another record_start marker 52₂ at step S4.2.1 and it is determined at steps S4.2.2 and S4.2.3 that the record_start 52₂ precedes the beginning of instant replay buffer 35, then a part 54₂ preceding the record_start marker 52₂ is also cropped at step S4.2.4.

The second section 51₂ overlaps with the instant replay buffer 35. In this case, the process branches at step S4.2.6.

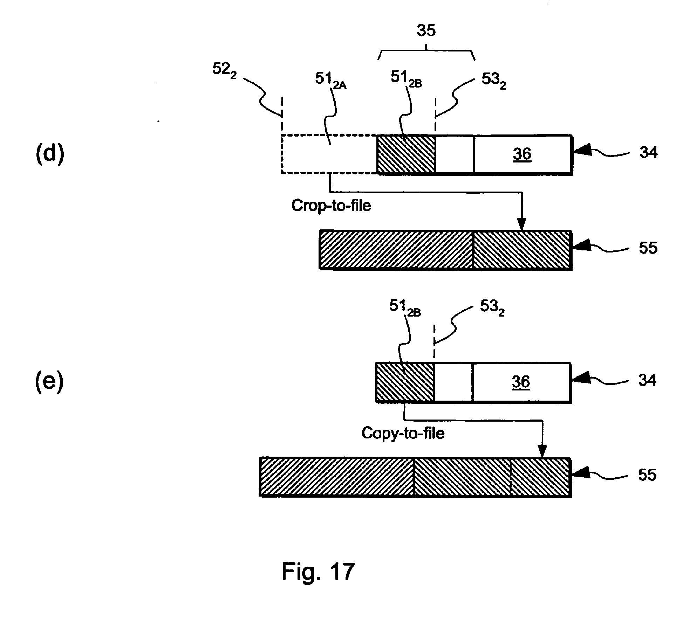

Referring to Figure 17d, a portion 51_{2A} between record_start 52₁ and the beginning of the instant replay buffer 35 is cropped and added to the start of the record file 55 (step S4.2.8).

Up until now, the process has cropped or cropped-to-file sections of the dynamic view buffer 34. Thus, the process has been operating in "crop mode". However, once the process enters the instant reply buffer 35, it begins to copy sections to the record file 55. Consequently, the process switches to "copy mode".

The process sets a copy_start marker (not shown) to the beginning of the instant replay buffer 35 (step S4.2.9) and sets a copy_end marker (not shown) to the record_end 53₂ (step S4.2.10). The copy_start and copy_end markers are preferably stored in cache memory (not shown) in the CPU 9 or in other memory, such as DRAM 10.

Referring to Figure 17e, a portion 51_{2B} found between the beginning of the instant replay buffer 35 and the record_end 53₂ is copied to the beginning of the record file 55 (step S4.2.11). Cropping is not used so as to preserve the instant replay buffer 35 intact.

The process then checks whether there are any further record_start marks 57 left in the section record marker file 56 (Figure 13) (step S4.2.12). If no other record_start mark 57 is found, as in this case, then the process ends. Otherwise, the process retrieves the record_start marker 57 which points to a record_ start 52 (step S4.2.13) and sets a copy_start marker (not shown) to the record_ start 52 (step S4.2.14). It then retrieves the record_end marker 58 (step S4.2.15). The process returns to step S4.2.10, where a copy_end marker (not shown) is set to the record_end 53, following which the section is copied to the beginning of the record file 55 at step S4.2.11.

The dynamic viewing buffer 34 and record file 55 is shown in Figure 12d. A file footer may be optionally added.

In these examples, the recording process creates a new record file. However, it will be appreciated that an existing record file may be used. It will also be appreciated that multiple record files may be used. Thus, one record file may be used to record sports programmes, while another record file may be used to record current affairs programmes.

In this way, the size of the playback file is kept in check, without sacrificing content which the user may wish to record.

Dynamic viewing has several advantages. The same buffer is used for viewing of live and buffered content. This simplifies switching between live and buffered content and can also make it quicker and less prone to visual glitches.

It will be appreciated that many modifications may be made to the embodiment described above. For example, the storage may comprise a random-access memory and may include a magnetic, electric or optical storage medium. A non-volatile solid-state memory, for example a semiconductor memory, can be used instead of a hard disk to store the dynamic view buffer. Data need not be compressed before being written to the dynamic view buffer.

## Claims

1. A method of digital recording comprising:
providing a playback file (34) for storing a stream of data (40);
**characterised by**
defining, within said playback file, at least one section (51₁) to be recorded;
providing a record file (55) comprising said at least one section; and providing an updated playback file (34) excluding said at least one section.

2. A method according to claim 1, wherein said providing said updated playback file (34) comprises excluding, from said updated playback file, at least one other section (54₁) of said playback data file which is not comprised in said record file.

3. A method according to claim 2, comprising defining, within said playback file (34), at least two sections (51₁, 51₂) to be recorded thereby defining at least one section (54₂), between neighbouring ones of said at least two sections (51₁, 51₂) to be recorded, which is not comprised in said record file (55).

4. A method according to claim 3, wherein said providing said updated playback file (34) comprises excluding said at least one section (54₂) between each of said neighbouring ones of said at least two sections (51₁) 51₂) to be recorded, which is not comprised in said record file (55).

5. A method according to claim 1, wherein said providing said record file (55) comprising said at least one section (51₁) comprises providing a record file initially without said at least one section.

6. A method according to claim 5, wherein said providing said record file (55) comprising said at least one section (51₁) comprises copying said at least one section from said playback file (34) to said record file.

7. A method according to claim 1, wherein said providing said updated playback file (34) excluding said at least one section (51₁) comprises cropping said at least one section from said playback file (34).

8. A method according to claim 5, wherein said providing said updated playback file (34) excluding said at least one section (51₁) comprises cropping said at least one section from said playback file (34).

9. A method according to claim 8, wherein said providing said record file (55) comprising said at least one section (51₁) comprises adding said at least one cropped section to said record file.

10. A method according to claim 1, further comprising cropping, from said playback file (34), at least one other section (54₁) of said playback file which is not comprised in said record file.

11. A method according to claim 10, comprising defining, within said playback file (34), at least two sections (51₁, 51₂) to be recorded thereby defining at least one section (54₂), between neighbouring ones of said at least two sections to be recorded, which is not comprised in said record file (55).

12. A method according to claim 11, comprising cropping from said playback file (34) said at least one section (54₂) between each of said neighbouring ones of said at least two sections (51₁) 51₂) to be recorded, which is not comprised in said record file.

13. A method according to any preceding claim, wherein said providing said playback file (34) includes adding a stream of data (40) to a first end (39) of said playback file.

14. A method according to claim 13, wherein said providing said playback,file (34) includes cropping data from a second end (37) of said playback file.

15. A method according to claim 14, comprising suspending cropping before defining said at least one section (51₁) to be recorded.

16. A method according to claim 15, comprising resuming cropping after defining said at least one section (51₁) to be recorded.

17. A method according to claim 15 or 16, comprising resuming cropping after providing said record file (55) comprising said at least one section (51₁).

18. A method according to any one of claims 15 to 17, comprising resuming cropping after adding said cropped section (51₁) to said record file (55).

19. A method according to any preceding claim, comprising providing a marker file (56) for storing data relating to position, within said playback file (34), of said at least one section (51₁) to be recorded.

20. A method according to claim 19, wherein said marker file (56) comprises at least one pair of pointers (57₁, 58₁), each pair of pointers for specifying a beginning (52₁) and an end (53₁) of a respective one of said at least one section (51₁).

21. A method according to claim 19, wherein said providing said playback file (34) includes adding a stream of data (40) to a first end (39) of said playback file and cropping data from a second end (37) of said playback file.

22. A method according to claim 21, wherein each pair of said pointers (57₁, 58₁) specify the beginning (52₁) and end (53₁) of a respective one of said at least one section relative to the first end (37) of said playback file (34).

23. A method according to claim 21, wherein each pair of said pointers (57₁, 58₁) specify the beginning (52₁) and end (53₁) of a respective one of said at least one section relative to the second end (39) of said playback file (34).

24. A method according to claim 23, further comprising updating said marker file (56) following cropping of data from said second end (39) of said playback file (34).

25. A method according to any preceding claim, comprising receiving a stream of encoded data (40) and storing said stream in said playback file (34).

26. A method according to claim 25, wherein said stream of encoded data (40) is compressed.

27. A method according to claim 26, wherein said stream of encoded data (40) is encoded according to an MPEG standard.

28. A method according to claim 27, comprising retrieving a stream of encoded data (41) from said updated playback file (34).

29. A method according to claim 28, comprising decoding said stream of encoded data (41) retrieved from said updated playback file (34).

30. A method according to claim 27, comprising retrieving a stream of encoded data from said record file (55).

31. A method according to claim 30, comprising decoding said stream of encoded data retrieved from said record file (50).

32. A computer program which, when loaded and executed by a digital recording device, causes said digital recording device:
to provide a playback file (34) for storing a stream of data (40);
**characterised in that** the computer program, when loaded and executed by a digital recording device, causes said digital recording device:
to define, within said playback file, at least one section (51₁) to be recorded;
to provide a record file (55) comprising said at least one section; and
to provide an updated playback file (34) excluding said at least one section.

33. A digital recording device comprising:
a storage medium (18);
a processor (9);
wherein said processor is configured to provide a playback file (34) for storing a stream of data (40) in said storage medium, **characterised in that** the processor is configured to define, within said playback file, at least one section (51₁) to be recorded; to provide a record file (55) comprising said at least one section and to provide an updated playback file excluding said at least one section.

34. A digital television receiver (1) including the digital recording device according to claim 33.

35. A digital television set (2) including a digital recording device according to claim 33.

## Patentansprüche

1. Digitales Aufzeichnungsverfahren, umfassend:
- Bereitstellen einer Wiedergabedatei (34) zum Speichern eines Datenstroms (40);
**gekennzeichnet durch**
- Definieren von mindestens einem aufzuzeichnenden Abschnitt (51₁) in der Wiedergabedatei (34);
- Bereitstellen einer Aufzeichnungsdatei (55), die den mindestens einen Abschnitt umfasst; und
- Bereitstellen einer aktualisierten Wiedergabedatei (34), die den mindestens einen Abschnitt ausschließt.

2. Verfahren nach Anspruch 1, wobei das Bereitstellen der aktualisierten Wiedergabedatei (34) umfasst
- Ausschließen von mindestens einem anderen Abschnitt (54₁) der Wiedergabedatei aus der aktualisierten Wiedergabedatei, der nicht in der Aufzeichnungsdatei enthalten ist.

3. Verfahren nach Anspruch 2, umfassend
- Definieren von mindestens zwei aufzuzeichnenden Abschnitten (51₁, 51₂) in der Wiedergabedatei (34), wodurch mindestens ein Abschnitt (54₂) zwischen benachbarten der mindestens zwei aufzuzeichnenden Abschnitte (51₁, 51₂) definiert wird, der nicht in der Aufzeichnungsdatei (55) enthalten ist.

4. Verfahren nach Anspruch 3, wobei das Bereitstellen der aktualisierten Wiedergabedatei (34) umfasst
- Ausschließen des mindestens einen Abschnitts (54₂) zwischen allen benachbarten der mindestens zwei aufzuzeichnenden Abschnitten (51₁, 51₂), der nicht in der Aufzeichnungsdatei (55) enthalten ist.

5. Verfahren nach Anspruch 1, wobei das Bereitstellen der Aufzeichnungsdatei (55), die den mindestens einen Abschnitt (51₁) umfasst, umfasst
- Bereitstellen einer Aufzeichnungsdatei anfänglich ohne den mindestens einen Abschnitt.

6. Verfahren nach Anspruch 5, wobei das Bereitstellen der Aufzeichnungsdatei (55), die den mindestens einen Abschnitt (51₁) umfasst, umfasst
- Kopieren des mindestens einen Abschnitts aus der Wiedergabedatei (34) in die Aufzeichnungsdatei.

7. Verfahren nach Anspruch 1, wobei das Bereitstellen der aktualisierten Wiedergabedatei (34), die den mindestens einen Abschnitt (51₁) ausschließt, umfasst
- Herausschneiden des mindestens einen Abschnitts aus der Wiedergabedatei (34).

8. Verfahren nach Anspruch 5, wobei das Bereitstellen der aktualisierten Wiedergabedatei (34), die den mindestens einen Abschnitt (51₁) ausschließt, umfasst
- Herausschneiden des mindestens einen Abschnitts aus der Wiedergabedatei (34).

9. Verfahren nach Anspruch 8, wobei das Bereitstellen der Aufzeichnungsdatei (55), die den mindestens einen Abschnitt (51₁) umfasst, umfasst
- Hinzufügen des mindestens einen herausgeschnittenen Abschnitts zu der Aufzeichnungsdatei.

10. Verfahren nach Anspruch 1, weiter umfassend
- Herausschneiden von mindestens einem Abschnitt (54₁) der Wiedergabedatei aus der Wiedergabedatei (34), der nicht in der Aufzeichnungsdatei enthalten ist.

11. Verfahren nach Anspruch 10, umfassend
- Definieren von mindestens zwei aufzuzeichnenden Abschnitten (51₁, 51₂) in der Wiedergabedatei (34), wodurch mindestens ein Abschnitt (54₂) zwischen benachbarten der mindestens zwei aufzuzeichnenden Abschnitte definiert wird, der nicht in der Aufzeichnungsdatei (55) enthalten ist.

12. Verfahren nach Anspruch 11, umfassend
- Herausschneiden des mindestens einen Abschnitts (54₂) zwischen allen der benachbarten der mindestens zwei aufzuzeichnenden Abschnitten (51₁, 51₂) aus der Wiedergabedatei (34), der nicht in der Aufzeichnungsdatei enthalten ist.

13. Verfahren nach irgendeinem der vorhergehenden Ansprüche, wobei das Bereitstellen der Wiedergabedatei (34) ein Hinzufügen eines Datenstroms (40) an ein erstes Ende (39) der Wiedergabedatei umfasst.

14. Verfahren nach Anspruch 13, wobei das Bereitstellen der Wiedergabedatei (34) ein Herausschneiden von Daten von einem zweiten Ende (37) der Wiedergabedatei umfasst.

15. Verfahren nach Anspruch 14, umfassend
- Aussetzen des Herausschneidens, bevor der mindestens eine aufzuzeichnende Abschnitt (51₁) definiert wird.

16. Verfahren nach Anspruch 15, umfassend
- Wiederaufnehmen des Herausschneidens nach dem Definieren des mindestens einen aufzuzeichnenden Abschnitts (51₁).

17. Verfahren nach Anspruch 15 oder 16, umfassend
- Wiederaufnehmen des Herausschneidens nach dem Bereitstellen der Aufzeichnungsdatei (55), die den mindestens einen Abschnitt (51₁) umfasst.

18. Verfahren nach irgendeinem der Ansprüche 15 bis 17, umfassend
- Wiederaufnehmen des Herausschneidens nach dem Hinzufügen des herausgeschnittenen Abschnitts (51₁) zu der Aufzeichnungsdatei (55).

19. Verfahren nach irgendeinem vorhergehenden Anspruch, umfassend
- Bereitstellen einer Marker-Datei (56) zum Speichern von Daten, die sich auf die Position des mindestens einen aufzuzeichnenden Abschnitts (51₁) in der Wiedergabedatei (34) beziehen.

20. Verfahren nach Anspruch 19, wobei die Marker-Datei (56) mindestens ein Paar von Zeigern (57₁, 58₁) umfasst, wobei jedes Paar von Zeigern zum Angeben eines Beginns (52₁) und eines Endes (53₁) eines jeweiligen des mindestens einen Abschnitts (51₁) ist.

21. Verfahren nach Anspruch 19, wobei das Bereitstellen der Wiedergabedatei (34) das Hinzufügen eines Datenstroms (40) an ein erstes Ende (39) der Wiedergabedatei und Herausschneiden von Daten von einem zweiten Ende (37) der Wiedergabedatei umfasst.

22. Verfahren nach Anspruch 21, wobei jedes Paar von Zeigern (57₁, 58₁) den Beginn (52₁) und das Ende (53₁) eines jeweiligen des mindestens einen Abschnitts in Bezug auf das erste Ende (37) der Wiedergabedatei (34) angibt.

23. Verfahren nach Anspruch 21, wobei jedes Paar von Zeigern (57₁, 58₁) den Beginn (52₁) und das Ende (53₁) eines jeweiligen des mindestens einen Abschnitts in Bezug auf das zweite Ende (39) der Wiedergabedatei (34) angibt.

24. Verfahren nach Anspruch 23, weiter umfassend
- Aktualisieren der Marker-Datei (56) nach einem Herausschneiden von Daten von dem zweiten Ende (39) der Wiedergabedatei (34).

25. Verfahren nach irgendeinem vorhergehenden Anspruch, umfassend
- Empfangen eines Stroms kodierter Daten (40); und
- Speichern des Stroms in der Wiedergabedatei (34).

26. Verfahren nach Anspruch 25, wobei der Strom kodierter Daten (40) komprimiert ist.

27. Verfahren nach Anspruch 26, wobei der Strom kodierter Daten (40) gemäß einem MPEG-Standard kodiert ist.

28. Verfahren nach Anspruch 27, umfassend
- Abrufen eines Stroms kodierter Daten (41) aus der aktualisierten Wiedergabedatei (34).

29. Verfahren nach Anspruch 28, umfassend
- Dekodieren des Stroms kodierter Daten (41), der aus der aktualisierten Wiedergabedatei (34) abgerufen wurde.

30. Verfahren nach Anspruch 27, umfassend
- Abrufen eines Stroms kodierter Daten aus der Aufzeichnungsdatei (55).

31. Verfahren nach Anspruch 30, umfassend
- Dekodieren des Stroms kodierter Daten, der aus der Aufzeichnungsdatei (50) abgerufen wurde.

32. Computerprogramm, das, wenn es durch eine digitale Aufzeichnungsvorrichtung geladen und ausgeführt wird, die digitale Aufzeichnungsvorrichtung veranlasst zum:
- Bereitstellen einer Wiedergabedatei (34) zum Speichern eines Datenstroms (40);
**dadurch gekennzeichnet, dass** das Computerprogramm, wenn es durch eine digitale Aufzeichnungsvorrichtung geladen und ausgeführt wird, die digitale Aufzeichnungsvorrichtung veranlasst zum
- Definieren von mindestens einem aufzuzeichnenden Abschnitt (51₁) in der Wiedergabedatei (34);
- Bereitstellen einer Aufzeichnungsdatei (55), die den mindestens einen Abschnitt umfasst; und
- Bereitstellen einer aktualisierten Wiedergabedatei (34), die den mindestens einen Abschnitt ausschließt.

33. Digitale Aufzeichnungsvorrichtung, umfassend
- ein Speichermedium (18);
- einen Prozessor (9);
wobei der Prozessor dazu konfiguriert ist, eine Wiedergabedatei (34) zum Speichern eines Datenstroms (40) in dem Speichermedium bereitzustellen;
**dadurch gekennzeichnet, dass** der Prozessor konfiguriert zum
- Definieren von mindestens einem aufzuzeichnenden Abschnitt (51₁) in der Wiedergabedatei (34);
- Bereitstellen einer Aufzeichnungsdatei (55), die den mindestens einen Abschnitt umfasst; und
- Bereitstellen einer aktualisierten Wiedergabedatei (34), die den mindestens einen Abschnitt ausschließt.

34. Digitaler Fernsehempfänger (1), einschließend eine digitale Aufzeichnungsvorrichtung nach Anspruch 33.

35. Digitales Fernsehgerät (2), einschließend eine digitale Aufzeichnungsvorrichtung nach Anspruch 33.

## Revendications

1. Procédé d'enregistrement numérique comprenant l'étape consistant à :
fournir un fichier de lecture (34) pour mémoriser un flux de données (40) ;
**caractérisé par** les étapes consistant à :
définir, à l'intérieur dudit fichier de lecture, au moins une partie (51₁) à enregistrer ;
fournir un fichier d'enregistrement (55) comprenant ladite au moins une partie ; et
fournir un fichier de lecture mis à jour (34) excluant ladite au moins une partie.

2. Procédé selon la revendication 1, dans lequel ladite étape consistant à fournir ledit fichier de lecture mis à jour (34) comprend l'étape consistant à exclure, dudit fichier de lecture mis à jour, au moins une autre partie (54₁) dudit fichier de données de lecture qui n'est pas comprise dans ledit fichier d'enregistrement.

3. Procédé selon la revendication 2, comprenant l'étape consistant à définir, à l'intérieur dudit fichier de lecture (34), au moins deux parties (51₁, 51₂) à enregistrer définissant de ce fait au moins une partie (54₂), entre des parties voisines desdites au moins deux parties (51₁, 51₂) à enregistrer, qui n'est pas comprise dans ledit fichier d'enregistrement (55).

4. Procédé selon la revendication 3, dans lequel ladite étape consistant à fournir ledit fichier de lecture mis à jour (34) comprend l'étape consistant à exclure ladite au moins une partie (54₂) entre chacune desdites parties voisines desdites au moins deux parties (51₁, 51₂) à enregistrer, qui n'est pas comprise dans ledit fichier d'enregistrement (55).

5. Procédé selon la revendication 1, dans lequel ladite étape consistant à fournir ledit fichier d'enregistrement (55) comprenant ladite au moins une partie (51₁) comprend l'étape consistant à fournir un fichier d'enregistrement initialement sans ladite au moins une partie.

6. Procédé selon la revendication 5, dans lequel ladite étape consistant à fournir ledit fichier d'enregistrement (55) comprenant ladite au moins une partie (51₁) comprend l'étape consistant à copier ladite au moins une partie dudit fichier de lecture (34) audit fichier d'enregistrement.

7. Procédé selon la revendication 1, dans lequel ladite étape consistant à fournir ledit fichier de lecture mis à jour (34) excluant ladite au moins une partie (51₁) comprend l'étape consistant à couper ladite au moins une partie dudit fichier de lecture (34).

8. Procédé selon la revendication 5, dans lequel ladite étape consistant à fournir ledit fichier de lecture mis à jour (34) excluant ladite au moins une partie (51₁) comprend l'étape consistant à couper ladite au moins une partie dudit fichier de lecture (34).

9. Procédé selon la revendication 8, dans lequel ladite étape consistant à fournir ledit fichier d'enregistrement (55) comprenant ladite au moins une partie (51₁) comprend l'étape consistant à ajouter ladite au moins une partie coupée audit fichier d'enregistrement.

10. Procédé selon la revendication 1, comprenant en outre l'étape consistant à couper, dudit fichier de lecture (34), au moins une autre partie (54₁) dudit fichier de lecture qui n'est pas comprise dans ledit fichier d'enregistrement.

11. Procédé selon la revendication 10, comprenant l'étape consistant à définir, à l'intérieur dudit fichier de lecture (34), au moins deux parties (51₁, 51₂) à enregistrer définissant de ce fait au moins une partie (54₂) entre des parties voisines desdites au moins deux parties à enregistrer, qui n'est pas comprise dans ledit fichier d'enregistrement (55).

12. Procédé selon la revendication 11, comprenant l'étape consistant à couper dudit fichier de lecture (34) ladite au moins une partie (54₂) entre chacune desdites parties voisines desdites au moins deux parties (51₁, 51₂) à enregistrer, qui n'est pas comprise dans ledit fichier d'enregistrement.

13. Procédé selon l'une quelconque des revendications précédentes,
dans lequel ladite étape consistant à fournir ledit fichier de lecture (34) comprend l'étape consistant à ajouter un flux de données (40) à une première extrémité (39) dudit fichier de lecture.

14. Procédé selon la revendication 13, dans lequel ladite étape consistant à fournir ledit fichier de lecture (34) comprend l'étape consistant à couper des données d'une deuxième extrémité (37) dudit fichier de lecture.

15. Procédé selon la revendication 14, comprenant l'étape consistant à suspendre la coupure avant de définir ladite au moins une partie (51₁) à enregistrer.

16. Procédé selon la revendication 15, comprenant l'étape consistant à reprendre la coupure après la définition de ladite au moins une partie (51₁) à enregistrer.

17. Procédé selon la revendication 15 ou 16, comprenant l'étape consistant à reprendre la coupure après avoir fourni ledit fichier d'enregistrement (55) comprenant ladite au moins une partie (51₁).

18. Procédé selon l'une quelconque des revendications 15 à 17, comprenant l'étape consistant à reprendre la coupure après avoir ajouté ladite partie coupée (51₁) audit fichier d'enregistrement (55).

19. Procédé selon l'une quelconque des revendications précédentes, comprenant l'étape consistant à fournir un fichier marqueur (56) pour mémoriser des données relatives à la position, à l'intérieur dudit fichier de lecture (34), de ladite au moins une partie (51₁) à enregistrer.

20. Procédé selon la revendication 19, dans lequel ledit fichier marqueur (56) comprend au moins une paire de pointeurs (57₁, 58₁), chaque paire de pointeurs servant à spécifier un début (52₁) et une fin (53₁) de l'une respective de ladite au moins une partie (51₁).

21. Procédé selon la revendication 19, dans lequel ladite étape consistant à fournir ledit fichier de lecture (34) comprend l'étape consistant à ajouter un flux de données (40) à une première extrémité (39) dudit fichier de lecture et à couper des données d'une deuxième extrémité (37) dudit fichier de lecture.

22. Procédé selon la revendication 21, dans lequel chaque paire desdits pointeurs (57₁, 58₁) spécifie le début (52₁) et la fin (53₁) de l'une respective de ladite au moins une partie relative à la première extrémité (37) dudit fichier de lecture (34).

23. Procédé selon la revendication 21, dans lequel chaque paire desdits pointeurs (57₁, 58₁) spécifie le début (52₁) et la fin (53₁) de l'une respective de ladite au moins une partie relative à la deuxième extrémité (39) dudit fichier de lecture (34).

24. Procédé selon la revendication 23, comprenant en outre l'étape consistant à mettre à jour ledit fichier marqueur (56) à la suite de la coupure de données de ladite deuxième extrémité (39) dudit fichier de lecture (34).

25. Procédé selon l'une quelconque des revendications précédentes, comprenant l'étape consistant à recevoir un flux de données codées (40) et l'étape consistant à mémoriser ledit flux dans ledit fichier de lecture (34).

26. Procédé selon la revendication 25, dans lequel ledit flux de données codées (40) est compressé.

27. Procédé selon la revendication 26, dans lequel ledit flux de données codées (40) est codé selon une norme MPEG.

28. Procédé selon la revendication 27, comprenant l'étape consistant à extraire un flux de données codées (41) dudit fichier de lecture mis à jour (34).

29. Procédé selon la revendication 28, comprenant l'étape consistant à décoder ledit flux de données codées (41) extrait dudit fichier de lecture mis à jour (34).

30. Procédé selon la revendication 27, comprenant l'étape consistant à extraire un flux de données codées dudit fichier d'enregistrement (55).

31. Procédé selon la revendication 30, comprenant l'étape consistant à décoder ledit flux de données codées extrait dudit fichier d'enregistrement (50).

32. Programme informatique qui, lorsqu'il est chargé et exécuté par un dispositif d'enregistrement numérique, amène ledit dispositif d'enregistrement numérique à :
fournir un fichier de lecture (34) pour mémoriser un flux de données (40) ;
**caractérisé en ce que** le programme informatique, lorsqu'il est chargé et exécuté par un dispositif d'enregistrement numérique, amène ledit dispositif d'enregistrement numérique à :
définir, à l'intérieur dudit fichier de lecture, au moins une partie (51₁) à enregistrer ;
fournir un fichier d'enregistrement (55) comprenant ladite au moins une partie ; et
fournir un fichier de lecture mis à jour (34) excluant ladite au moins une partie.

33. Dispositif d'enregistrement numérique comprenant :
un support de mémorisation (18) ;
un processeur (9) ;
dans lequel ledit processeur est configuré pour fournir un fichier de lecture (34) pour mémoriser un flux de données (40) dans ledit support de mémorisation, **caractérisé en ce que** le processeur est configuré pour définir, à l'intérieur dudit fichier de lecture, au moins une partie (51₁) à enregistrer ; fournir un fichier d'enregistrement (55) comprenant ladite au moins une partie et fournir un fichier de lecture mis à jour excluant ladite au moins une partie.

34. Récepteur de télévision numérique (1) comprenant le dispositif d'enregistrement numérique selon la revendication 33.

35. Téléviseur numérique (2) comprenant un dispositif d'enregistrement numérique selon la revendication 33.
